# EUROPÄISCHE PATENTANMELDUNG

(11) **EP 4 159 043 A1**
(43) Veröffentlichungstag der Anmeldung: **05.04.2023**
(21) Anmeldenummer: 22199152.4
(22) Anmeldetag: 30.09.2022
(51) Int. Cl.: A23G 3/34, A23G 3/44, A23G 3/48, A23G 3/52, A23G 3/54, A23L 21/12, A23P 20/20, A23L 19/18, A23L 19/00

(54) **VERFAHREN ZUR HERSTELLUNG EINES FRUCHTHALTIGEN LEBENSMITTELS**

(30) Priorität: 01.10.2021 DE 102021004933
(71) Anmelder: Geiger, Alexander, Uelzen (DE)
(72) Erfinder: Geiger, Alexander, Uelzen (DE)
(74) Vertreter: Böhm, Brigitte

(57) **Zusammenfassung**

Die vorliegende Erfindung betrifft ein Verfahren zur Herstellung eines fruchthaltigen Lebensmittels (10), wobei das Verfahren einen Schritt eines Homogenisieren von 60 % bis 99 % eines pürierten Ausgangsproduktes mit 1 % bis 10 % wenigstens eines pflanzlichen Proteins, mit 0 % bis 30 % einer zugegebenen essbaren Pflanzenfaser und mit 0 % bis 30 % wenigstens eines Zuckers oder wenigstens eines Zuckerersatzstoffes, um eine homogenisierte Masse zu erhalten, wobei die homogenisierte Masse aufgeschlagen wird, um eine Volumenzunahme der homogenisierten Masse zu erreichen; und einen Schritt eines Dehydrierens der homogenisierten Masse umfasst, bei einer Temperatur von 40 °C bis 80 °C, bis die homogenisierte Masse einen Wassergehalt von 0 % bis 30 % aufweist. Ferner betrifft die Erfindung ein fruchthaltiges Lebensmittel sowie dessen Verwendung.

## Beschreibung

Die vorliegende Erfindung betrifft ein Verfahren zur Herstellung eines fruchthaltigen Lebensmittels. Ferner betrifft die Erfindung ein fruchthaltiges Lebensmittel sowie dessen Verwendung.

Heutzutage existiert eine Vielzahl verschiedenster Lebensmittel, welche sich nicht nur in Hinsicht auf Geschmack, Konsistenz und Zusammensetzung unterscheiden, sondern auch in Bezug auf deren Nährwert. In einigen kulturellen Kreisen haben sich dabei insbesondere nährstoffarme Süßwaren und Salzgebäck etabliert, da diese kostengünstig erwerbbar, lange haltbar und vielerorts verfügbar sind. Im Sinne einer ausgewogenen Ernährung ist jedoch vielmehr ein abwechslungsreicher Speiseplan ratsam, welcher den regelmäßigen Verzehr von nährstoffreichen Lebensmitteln, beispielsweise Obst und Gemüse berücksichtigt.

Gerade Obst und Gemüse sind des Öfteren relativ teuer und im Vergleich zu Süßwaren und Salzgebäck weniger lange haltbar. Es hat sich daher gezeigt, dass Verbraucher oftmals auf bereits verarbeitete Lebensmittel zurückgreifen, welche beispielsweise durch die Zugabe von Konservierungsstoffen und Stabilisatoren länger haltbar sind. Bei der Verarbeitung der dabei verwendeten Ausgangsprodukte ist es jedoch nicht unüblich, dass wichtige Nährstoffe, insbesondere Vitamine verloren gehen, wodurch der Nährwert des verarbeiteten Lebensmittels reduziert wird. Folglich besteht ein allgemeines Interesse daran, Herstellungsverfahren für fruchthaltige Lebensmittel zu entwickeln, welche vergleichsweise einfach und kostengünstig sind, wobei das erzeugte Lebensmittel einen möglichst hohen Nährstoffgehalt bei gleichzeitig langer Haltbarkeit aufweist, insbesondere ohne dass künstliche Stabilisatoren hinzugegeben werden müssen. In diesem Zusammenhang werden Früchte bzw. Obst und Gemüse während der Verarbeitung oftmals püriert, um schwerverdauliche Bestandteile, beispielsweise Kerne oder Samen, leichter vom aromatischen Fruchtfleisch trennen zu können. Ferner werden fruchthaltige Lebensmittel des Öfteren dehydriert, um die Haltbarkeit des Lebensmittels zu verbessern, da sich Bakterien und Schimmelpilze aufgrund des Wasserentzugs wesentlich schlechter verbreiten und vermehren können.

Aus der DE 10 2017 121 646 A1 ist beispielsweise ein Verfahren zur Herstellung eines homogenen Gemüsepräparats bekannt, welches eine wärmeempfindliche Komponente umfasst, insbesondere Vitamine, Proteine, Probiotika sowie Aromastoffe. Das besagte Verfahren ermöglicht die Herstellung eines nährstoffreichen Lebensmittels durch Zugabe der wärmeempfindlichen Komponente, welche beispielsweise in Form eines Pulvers oder einer Aufschlämmung bei einer Temperatur zwischen 80 °C und 120 °C zu dem Gemüsepräparat gegeben wird.

Ferner ist aus der WO 2013/019 936 A1 ein nährstoffreiches Lebensmittel bekannt, welches aus Früchten und/oder Gemüse besteht und als ein sogenanntes Fruchtleder vorliegt. Derartige Fruchtleder eignen sich zum Verzehr als kleine Zwischenmahlzeit bzw. Snack, da sie leicht handhabbar und auch unterwegs einfach zu konsumieren sind. Im Zuge deren Herstellung wird eine pürierte Fruchtmasse in eine spezifische Form gebracht, dehydriert bis eine lederartige Konsistenz erreicht ist, optional gewalzt, um eine dichte Struktur zu erzeugen, und anschließend typischerweise in dünne Scheiben geschnitten.

Die US 2010/0 015 296 A1 offenbart ein Verfahren zur Herstellung eines fruchtbasierten Lebensmittels. Im Zuge des Herstellungsverfahrens werden Früchte püriert, getrocknet bzw. dehydriert und anschließend in Schichten mit vorbestimmter Dicke geformt. Optional werden diese Fruchtschichten in kleine Partikel mit maximaler Größe von 3 mm gemahlen. Das erzeugte Lebensmittel umfasst schließlich mehrere Fruchtschichten und Fruchtpartikel, wobei Butter zwischen die einzelnen Fruchtschichten aufgebracht wird.

Aus der US 2012/0 183 673 A1 ist ferner ein Verfahren zur Herstellung eines gesüßten, wasserhaltigen Lebensmittels bekannt. Zur Herstellung des Lebensmittels werden Fruchtmischungen verwendet, welche mit Zusatzstoffen, insbesondere Zucker, Dickungsmittel und Flüssigkeit bzw. Feuchtigkeit versetzt und aufgeheizt werden. Das resultierende Lebensmittel weist eine gelartige Konsistenz mit hoher Viskosität auf.

Es zeigt sich, dass bei der Herstellung fruchthaltiger Lebensmittel oftmals auf die Zugabe von künstlichen bzw. industriell verarbeiteten Zusatzstoffen zurückgegriffen wird, um den Geschmack, den Nährwert sowie die Haltbarkeit des erzeugten Lebensmittels zu beeinflussen. Dies ist jedoch nicht im Sinne vieler Konsumenten, welche möglichst natürliche fruchthaltige Lebensmittel bevorzugen.

Es ist daher die Aufgabe der vorliegenden Erfindung ein Verfahren zur Herstellung eines fruchthaltigen Lebensmittels bereitzustellen, wodurch ein fruchthaltiges Lebensmittel mit hohem Nährwert, einem natürlichen Aroma und langer Haltbarkeit bei gleichzeitig geringem Herstellungsaufwand sowie geringen Herstellungskosten ermöglicht. Es ist ferner eine Aufgabe der vorliegenden Erfindung ein fruchthaltiges Lebensmittel bereitzustellen sowie mögliche Verwendungszwecke des entsprechenden Lebensmittels aufzuzeigen.

Diese Aufgabe wird erfindungsgemäß in einem ersten Aspekt durch ein Verfahren zu Herstellung eines fruchthaltigen Lebensmittels gelöst, wobei das Verfahren einen Schritt eines Homogenisierens von 60 % bis 99 % eines pürierten Ausgangsproduktes mit 1 % bis 10 % wenigstens eines pflanzlichen Proteins, mit 0 % bis 30 % einer zugegebenen essbaren Pflanzenfaser und mit 0 % bis 30 % wenigstens eines Zuckers oder eines Zuckerersatzstoffes, um eine homogenisierte Masse zu erhalten, wobei die homogenisierte Masse aufgeschlagen wird, um eine Volumenzunahme der homogenisierten Masse zu erreichen; und einen Schritt eines Dehydrierens der homogenisierten Masse umfasst, bei einer Temperatur von 40 °C bis 80 °C, bis die homogenisierte Masse einen Wassergehalt von 0 % bis 30 %, vorzugsweise 5 % bis 30% aufweist.

Bei dem pürierten Ausgangsprodukt kann es sich insbesondere um Obst und/oder Gemüse handeln, welches im Wesentlichen aus leicht verdaulichen pflanzlichen Bestandteilen, vor allem aus Fruchtfleisch besteht, da bevorzugt im Zuge eines vorgelagerten Pürierschrittes schwer verdauliche pflanzliche Bestandteile entweder ausreichend zerkleinert oder entfernt wurden. Als schwer verdaulich sind in diesem Zusammenhang sämtliche pflanzlichen Bestandteile einzustufen, welche vom menschlichen Körper im Allgemeinen nicht oder nur geringfügig verdaut werden können. Durch besagtes Pürieren kann das Ausgangsprodukt eine feine, homogene sowie breiartige Konsistenz aufweisen, wobei das Pürieren selbst auf verschiedene Arten durchgeführt werden kann, beispielsweise durch Passieren oder mittels eines Pürierstabes. Bevorzugt hat das pürierte Ausgangsprodukt eine solche Konsistenz, dass es durch ein Sieb oder eine Passierscheibe mit einer Sieb- bzw. Lochgröße von 0,1 mm bis 10 mm durchtritt. Bevorzugt wird das pürierte Produkt durch das Passieren durch eine derartige Passierscheibe zerkleinert und hergestellt. In besonders bevorzugten Ausführungsformen und abhängig von der beabsichtigen Konsistenz ist das Ausgangsprodukt derartig zerkleinert, dass es durch eine Passierscheibe von 0,5 mm bis 4 mm Lochdurchmesser hindurchtritt, insbesondere mindestens durch eine Passierscheibe mit 0,5 mm, 1 mm, 2 mm, 3 mm oder 4 mm Lochdurchmesser.

Es ist ebenfalls denkbar, dass das verwendete Ausgangsprodukt in einem behandelten Zustand, insbesondere in einem wärmebehandelten Zustand vorliegt.

Als nicht-limitierendes Beispiel für ein Ausgangsprodukt sei an dieser Stelle die Verwendung von Äpfeln angeführt. Pürierte Äpfel bzw. Apfelmus sind zur Herstellung eines fruchthaltigen Lebensmittels gemäß dem erfindungsgemäßen Verfahren besonders geeignet, da diese gut verarbeitet werden können und ganzjährlich verfügbar sind. Ferner weisen Äpfel einen hohen Gehalt an Vitaminen, Mineralien und Ballaststoffen auf, welche allesamt gesundheitsfördernde und ernährungsphysiologisch wertvolle Inhaltstoffe eines Lebensmittels darstellen. Auch ist fertiges Apfelmus als Ausgangsprodukt in guter Qualität, insbesondere in Bioqualität, verfügbar.

In einem ersten Verfahrensschritt wird nun das pürierte Ausgangsprodukt mit wenigstens einem pflanzlichen Protein sowie optional einer zugegebenen essbaren Pflanzenfaser und wenigstens einem Zucker bzw. einem Zuckerersatzstoff vermischt, bis eine homogene breiartige Masse entsteht. Dies kann beispielsweise durch Rühren oder Verquirlen geschehen. Bei dem pflanzlichen Protein kann es sich beispielsweise um wenigstens ein Sojaprotein, ein Erbsenprotein, ein Rapsprotein, Weizen und fraktionierte Weizenproteine, ein Maisprotein, wie z.B. ein Zein-Protein, ein Reisprotein, ein Haferprotein, ein Kartoffelprotein, ein Erdnussprotein, grünes Erbsenpulver, grünes Bohnenpulver, Spirulina, Proteine aus Obst, Proteine aus Gemüse und Hülsenfrüchten, wie z.B. Bohnen, Buchweizen, Linsen, oder eine Kombination davon handeln, wobei diese Proteine auch synthetisch hergestellt sein können. Aufgrund der bekannten Unverträglichkeiten von Getreide bei vielen Personen kann es bevorzugt sein, dass das pflanzlichen Protein kein Getreideprotein ist, insbesondere kein Weizenprotein. Dementsprechend kann in derartigen Ausführungsformen jegliches pflanzliche Protein und insbesondere wenigstens eines aus den zuvor genannten Proteinen, jedoch mit Ausnahme von Getreide- bzw. von Weizenprotein verwendet werden.

Das pflanzliche Protein kann in jeder Art und Form vorliegen und eingesetzt werden, z.B. als Pulver oder als flüssiges Produkt.

Die zugegebene essbare Pflanzenfaser, welche optional in der homogenisierten Masse vorhanden ist, kann insbesondere zusätzlich zu Pflanzenfasern des pürierten Ausgangsprodukts vorliegen und kann vor allem Cellulose, Hemicellulose, Lignin, Pektin, Vitacel-Psyllium oder eine Kombination davon umfassen. Durch die Zugabe von Pflanzenfaser kann insbesondere die Festigkeit des herzustellenden Lebensmittels reguliert werden. Ferner kann über den Anteil der pflanzlichen Faser Einfluss auf für den Konsumenten relevante spezifische Verzehreigenschaften des Lebensmittels genommen werden, beispielsweise dessen Cremigkeit und Saftigkeit.

Auch die pflanzliche Faser kann erfindungsgemäß in jeglicher Art und Form eingesetzt werden, die der Fachmann für das fruchthaltige Lebensmittel als geeignet erkennt, z.B. in Pulverform oder als Produkt mit einer Faserlänge von bis zu 10 mm, bevorzugt bis zu 8 mm, 5 mm, 3 mm, 1 mm, 0,5 mm und 0,1 mm Faserlänge.

Bei dem Zucker bzw. dem Zuckerersatzstoff, welche insbesondere zur Regulierung des Geschmacks und der Süße des fruchthaltigen Lebensmittels eingesetzt werden können, kann es sich insbesondere um Saccharose, Dextrose, Raffinose, Glukose, Fruktosesirup bzw. Fruktose-Glukose-Sirup, Glukosesirup oder Stärkesirup, Karamellsirup, Laktose, Maltose bzw. Malzextrakt oder Gerstenmalzextrakt, Xylitol bzw. Xylit, Erythritol bzw. Erythrit, Isomalt, Sorbitol bzw. Sorbit, Mannitol, Lactitol bzw. Lactit, Maltitol bzw. Maltit, und/oder Polyglycitolsirup, sowie synthetische Süßstoffe, oder eine Kombination davon handeln. Alternativ ist es auch denkbar, dass anstelle oder zusätzlich zu der zugegebenen essbaren Pflanzenfaser und/oder dem Zucker bzw. dem Zuckerersatzstoff Galacto-Oligosaccharide, Fructo-Oligosaccharide, Fuco-Oligosaccharide, Xylo-Oligosaccharide, Palatinose-Oligosaccharide, Soja-Oligosaccharide, Gentio-Oligosaccharide, Inulin, Pektat, Alginat, Chondroitin, Hyaluronsäure, Heparin, Heparan, Sialoglykane, Fucoidan, Carrageen, Xanthangummi, Polydextrose, teilweise hydrolysiertes Guarkernmehl, Guarkernmehl oder eine Kombination davon verwendet werden.

Gemäß einem wichtigen Merkmal der vorliegenden Erfindung wird die homogenisierte Masse aufgeschlagen, um eine Volumenzunahme der homogenisierten Masse zu erreichen. Mit anderen Worten formuliert, kann durch das Aufschlagen bzw. Steifschlagen der Proteine in der homogenisierten Masse eine Volumenzunahme der gesamten homogenisierten Masse erreicht werden, wobei der Grad der Volumenzunahme insbesondere von dem Anteil des Proteins in der homogenisierten Masse, aber auch von der Dauer des Aufschlagens abhängt. Während des Aufschlagens wird die Volumenzunahme der homogenisierten Masse durch die Zufuhr von Luft in Verbindung mit der durch das Aufschlagen eingebrachten Energie erzielt, da dieses Vorgehen zu einem Einschluss von Luftbläschen durch die Proteine innerhalb der homogenisierten Masse führt. Dabei kann die homogenisierte Masse so lange aufgeschlagen werden, bis eine maximale Volumenzunahme erreicht ist, d.h. dass eine maximale Anzahl oder/und Größe an Luftbläschen in der homogenisierten Masse eingeschlossen ist und bei weiterem Aufschlagen keine darüber hinaus gehende Volumenzunahme mehr erfolgt. Diese maximale Volumenzunahme durch Aufschlagen wir als 100% Volumenzunahme bezeichnet. Es ist jedoch ebenfalls denkbar, die homogenisierte Masse lediglich teilweise aufzuschlagen, sodass eine Volumenzunahme von mindestens 10 %, z.B. eine Volumenzunahme im Bereich von 10 % bis 90 %, besonders bevorzugt eine Volumenzunahme von mindestens 25%, mindestens 30%, mindestens 40% oder mindestens 50 % im Vergleich zu einer maximal (zu 100%) aufgeschlagenen homogenisierten Masse erreicht wird. Durch das Aufschlagen der homogenisierten Masse wir eine luftige Masse erzeugt, welche eine schwammartige Konsistenz aufweist.

Ferner kann es vorgesehen sein, zu der homogenisierten Masse ein Treibmittel beizumengen, beispielsweise Natron, Hefe und/oder Backpulver, um das Volumen der homogenisierten Masse zu beeinflussen. Dabei kann eine durch das verwendete Treibmittel bedingte Volumenzunahme der homogenisierten Masse erzeugt werden. In diesem Zusammenhang gilt es, je nach Treibmittel, eine spezifische Temperatur sowie gegebenenfalls eine spezifische Ruhezeit zu beachten, in welcher das Treibmittel wirken kann. Im Fall von Hefe kann die spezifische Temperatur beispielsweise 37 °C betragen.

Um die aufgeschlagene homogenisierte Masse in eine leicht handhabbare Form zu überführen und insbesondere um die Haltbarkeit des fruchthaltigen Lebensmittels zu verbessern, wird die homogenisierte Masse in einem weiteren Verfahrensschritt dehydriert. Ferner kann der Geschmack des herzustellenden Lebensmittels durch das Dehydrieren intensiviert werden, da durch diesen Vorgang relativ geschmacksarmes Wasser aus dem fruchthaltigen Lebensmittel entfernt wird. Erfindungsgemäß wird die homogenisierte Masse bei einer Temperatur zwischen 40 °C und 80 °C dehydriert bzw. getrocknet, bis ihr Wassergehalt auf 0 % bis 30 %, bevorzugt auf 5 % bis 30 % reduziert ist. Der Schritt des Dehydrierens kann im einfachsten Fall mittels eines Ofens durchgeführt werden, wobei ebenso kommerzielle Vorrichtungen zum Dörren oder Dehydrieren eingesetzt werden können.

Das erfindungsgemäß hergestellte fruchthaltige Lebensmittel zeichnet sich sowohl durch dessen fruchtiges Aroma als auch durch eine lockere sowie luftige Konsistenz aus, welche unter anderem von den in die homogenisierte Masse eingebrachten Lufteinschlüssen definiert wird. Dies unterscheidet das fruchthaltige Lebensmittel beispielsweise von den eingangs erwähnten Fruchtledern, da diese eine relativ dichte Struktur aufweisen. Da das fruchthaltige Lebensmittel einfach portioniert und transportiert werden kann, eignet es sich besonders als kleine Zwischenmahlzeit bzw. Snack, beispielsweise in Form eines Fruchtriegels. Dazu kann das erfindungsgemäße fruchthaltige Lebensmittel beliebig geformt werden. Ferner weist das fruchthaltige Lebensmittel einen hohen Nährstoffgehalt und eine, im Vergleich zu herkömmlichen Früchten, lange Haltbarkeit auf.

In einer bevorzugten Ausführungsform des erfindungsgemäßen Verfahrens kann dieses ferner einen Schritt eines Bildens wenigstens einer ersten Schicht aus der dehydrierten, homogenisierten Masse, wobei die erste Schicht vorzugsweise eine Dicke von 0,4 cm bis 10 cm, besonders bevorzugt eine Dicke von 0,5 cm bis 5 cm aufweist; einen Schritt eines Aufbringens einer zweiten Schicht auf eine Oberfläche der ersten Schicht, wobei die zweite Schicht die nicht-dehydrierte, homogenisierte Masse umfasst und vorzugsweise eine Dicke von 0,05 cm bis 0,2 cm aufweist; und einen Schritt eines Aufschichtens von einer oder mehreren ersten Schichten umfassen, um wenigstens ein Stapelpaket zu erhalten, wobei in dem Stapelpaket jeweils eine zweite Schicht zwischen zwei ersten Schichten angeordnet ist.

Die erste Schicht kann insbesondere durch Zuschneiden der dehydrierten, homogenisierten Masse erhalten werden, wobei eine spezifische Form der ersten Schicht nicht vorgegeben ist. Somit kann die erste Schicht beispielsweise quaderförmig, zylindrisch oder prismenförmig ausgebildet sein. Ferner kann die erste Schicht wenigstens eine im Wesentlichen ebene Oberfläche aufweisen, welche sich parallel oder orthogonal zu einer Haupterstreckungsrichtung der ersten Schicht erstreckt. Die Dicke der ersten Schicht ist vorzugsweise auf 0,4 cm bis 10 cm, besonders bevorzugt auf 0,5 cm bis 5 cm begrenzt, um eine einfache Handhabung inklusive Verzehr des fruchthaltigen Lebensmittels zu ermöglichen. Es ist ebenfalls denkbar, dass die Dicke der ersten Schicht je nach Konsumentenwunsch, also gegebenenfalls dünner als 0,4 cm oder dicker als 10 cm ausgebildet werden kann.

In einem weiteren Schritt kann nun eine zweite Schicht, welche die nicht-dehydrierte, homogenisierte Masse umfasst, also die aufgeschlagene, homogenisierte Masse vor dem Schritt des Dehydrierens, flächig auf eine Oberfläche der ersten Schicht, vorzugsweise flächig auf die im Wesentlichen ebene Oberfläche der ersten Schicht aufgebracht werden. Dabei weist die zweite Schicht vorzugsweise eine Dicke von 0,05 cm bis 0,2 cm auf, sodass die zweite Schicht insbesondere dünner als die erste Schicht ausgebildet sein kann.

Anschließend kann eine weitere erste Schicht auf eine freie Oberfläche der zweiten Schicht aufgebracht werden, sodass ein Stapelpaket umfassend zwei erste Schichten und eine zweite Schicht erzeugt wird, wobei die zweite Schicht zwischen den beiden ersten Schichten angeordnet ist. Die zweite Schicht fungiert somit als Verbindungsschicht bzw. Klebeschicht für die beiden benachbarten ersten Schichten. Aufgrund des höheren Wassergehalts und der breiartigen Konsistenz der nicht-dehydrierten zweiten Schicht, kann durch das Kontaktieren einer ersten Schicht mit einer zweiten Schicht eine Bindungskraft erzeugt werden, welche das Stapelpaket zusammenhält. Das entsprechende Stapelpaket mit alternierender Abfolge aus einer ersten Schicht und einer zweiten Schicht kann nun um beliebig viele Schichten erweitert werden, um ein fruchthaltiges Lebensmittel mit gewünschten Abmessungen zu erhalten. An dieser Stelle sei ebenfalls erwähnt, dass die einzelnen ersten Schichten nicht zwangsläufig die gleiche Form aufweisen müssen und ferner auch an unterschiedlichen Oberflächen mit wenigstens einer zweiten Schicht bedeckt werden können, sodass die Form und Gestalt des fruchthaltigen Lebensmittels flexibel ausgebildet werden kann. Des Weiteren kann die Zusammensetzung der zur Herstellung eines fruchthaltigen Lebensmittels verwendeten ersten Schichten und zweiten Schichten voneinander abweichen, d.h. dass eine erste Schicht aus einer ersten dehydrierten, homogenisierten Masse, eine zweite Schicht aus einer ersten nicht-dehydrierten, homogenisierten Masse, eine weitere erste Schicht aus einer zweiten dehydrierten, homogenisierten Masse, etc. erzeugt wird. Demnach können beispielsweise die ersten Schichten eines Stapelpakets auf einem apfelhaltigen, pürierten Ausgangsprodukt basieren, während die zweiten Schichten des Stapelpaktes auf einem erdbeerhaltigen, pürierten Ausgangsprodukt basieren.

Optional kann das Stapelpaket ferner bei einer Temperatur von 40 °C bis 80 °C dehydriert werden, bis das Stapelpaket einen Wassergehalt von 0 % bis 30 %, bevorzugt 5 % bis 30 % aufweist. Dieses zusätzliche Dehydrieren dient insbesondere dazu, die in dem Stapelpaket umfassten, bisher nicht-dehydrierten zweiten Schichten länger haltbar zu machen und ferner zur Erhöhung der Bindungskräfte zwischen den ersten Schichten und den zweiten Schichten innerhalb des Stapelpakets.

Zum Verzehr des fruchthaltigen Lebensmittels kann das Stapelpaket nun z.B. quer zu dessen Haupterstreckungsrichtung in Scheiben geschnitten werden, welche vorzugsweise eine Stärke von 0,1 cm bis 10 cm, besonders bevorzugt eine Stärke von 0,5 cm bis 5 cm aufweisen. Die Stärke bzw. Dicke der Scheiben kann hierbei je nach Konsumentenwunsch angepasst werden. Alternativ kann das Stapelpaket auch in anderweitige Formen zugeschnitten bzw. überführt werden, beispielsweise zur Herstellung von fruchthaltigen Chips oder Pommes.

Um die Haltbarkeit des fruchthaltigen Lebensmittels sowie der aus dem Stapelpaket geschnittenen Scheiben weiter zu erhöhen, können jene oder das Stapelpaket selbst gefriergetrocknet werden oder bei einer Temperatur von 50 °C bis 80 °C bis zu einem absoluten Wassergehalt von 0 % bis 30 %, vorzugsweise 0 % bis 10 % dehydriert werden. Dies ist insbesondere dann vorteilhaft, wenn eine Lagerung des fruchthaltigen Lebensmittels über mehrere Tage bzw. Wochen angestrebt wird, da Lebensmittel mit einem Wassergehalt von 10 % oder weniger einen bekanntermaßen unattraktiven Nährboden für Bakterien und Schimmelpilze darstellen.

Zur Herstellung des pürierten Ausgangsproduktes, welches im Zuge des erfindungsgemäßen Verfahrens verwendet wird, können insbesondere Früchte bei einer Temperatur von 100 °C bis 180 °C erhitzt werden, bis die Früchte einen Wasserverlust von mindestens 15 % aufweisen, gefolgt von einem Abkühlen der Früchte, vorzugsweise auf eine Temperatur zwischen 100 °C und 0 °C, wobei die Früchte schließlich püriert werden, um das pürierte Ausgangsprodukt zu erhalten. Die Wärmebehandlung der Früchte dient hierbei insbesondere zum Garen und zur Dehydratation, wodurch die verwendeten Früchte eine weichere Konsistenz aufweisen und folglich leichter zu pürieren sind.

Optional kann wenigstens ein fruchthaltiger Saft zu dem pürierten Ausgangsprodukt oder zu den Früchten hinzugegeben werden, um die Geschmacksvielfalt und/oder die Farbgebung des herzustellenden fruchthaltigen Lebensmittels variieren zu können. Beispielhaft sei an dieser Stelle die Zugabe von Apfelsaft, Aroniasaft, Tomatensaft, Blaubeersaft, Cranberrysaft, Johannisbeersaft oder eine Kombination davon erwähnt, wobei zahlreiche weitere fruchthaltige Säfte verwendet werden können. Die Zugabe des Safts kann vorzugsweise vor der Wärmebehandlung der verwendeten Früchte durchgeführt werden, sodass die Früchte über einen vorbestimmten Zeitraum in dem fruchthaltigen Saft getränkt werden können. Alternativ kann der Saft jedoch auch unmittelbar vor Pürieren oder dem Homogenisieren des pürierten Ausgangsproduktes mit dem pflanzlichen Protein, der zugegebenen essbaren Pflanzenfaser und/oder dem Zucker bzw. dem Zuckerersatzstoff hinzugegeben werden.

In einer weiteren Ausführungsform des erfindungsgemäßen Verfahrens kann wenigstens ein Zusatzstoff zu dem pürierten Ausgangsprodukt oder zu den Früchten hinzugegeben werden, wobei der Zusatzstoff wenigstens ein Vitamin, einen Mineralstoff, insbesondere Spurenelemente, wie z.B. Kalzium, Magnesium, Eisen und/oder Zink, einen Aromastoff oder eine Kombination davon umfasst.

Ferner können ebenfalls sowie geschmackserzeugende Stoffe, beispielsweise Kakao, Kräuter, Gewürze, Nüsse, Hülsenfrüchte, Samen, pflanzliche Fette, Mikroorganismen und/oder synthetische Aromen zu dem pürierten Ausgangsprodukt oder zu den Früchten hinzugegen werden. Dementsprechend kann das herzustellende fruchthaltige Lebensmittel je nach Belieben mit ernährungsphysiologisch wertvollen Zusatzstoffen angereichert werden, wobei die entsprechenden Zusatzstoffe beispielsweise in Pulverform zu dem pürierten Ausgangsprodukt oder zu den Früchten hinzugegen werden können.

Wie bereits erwähnt, können zur Herstellung des pürierten Ausgangsproduktes Früchte verwendet werden, wobei im Rahmen der vorliegenden Erfindung der Begriff Früchte Obst, Gemüse oder eine Kombination davon umfasst. Unter Obst und Gemüse sind in diesem Zusammenhang alle genießbaren bzw. essbaren Obst- und Gemüsesorten zu verstehen, also beispielsweise Kernobst, Steinobst, Beerenobst, Schalenobst, Fruchtgemüse, Grobgemüse, Feingemüse sowie exotische Frucht- und Gemüsesorten. Ferner können hierbei alternativ oder zusätzlich auch Kräuter verwendet werden.

Die zur Herstellung des pürierten Ausgangsproduktes verwendeten Früchte können außerdem dehydrierte, gefriergetrocknete und gegebenenfalls rehydrierte Früchte sein. Die Verwendung derartiger Früchte ist insbesondere dann zu bevorzugen, wenn die Früchte vor deren Weiterverarbeitung in das pürierte Ausgangsprodukt über einen längeren Zeitraum gelagert und somit haltbar gemacht werden sollen.

In einer bevorzugten Ausführungsform des erfindungsgemäßen Verfahrens kann das fruchthaltige Lebensmittel mit Zucker, Puderzucker, Schokolade, Nüssen, Früchten oder einer Kombination davon in beliebiger Art und Weise und ganz oder teilweise umhüllt bzw. beschichtet werden. Dadurch kann einerseits eine ansprechende, appetiterzeugende Optik des fruchthaltigen Lebensmittels erzeugt werden und andererseits der Geschmack des fruchthaltigen Lebensmittels beeinflusst werden.

Gemäß einem zweiten Aspekt wird die Aufgabe erfindungsgemäß durch ein fruchthaltiges Lebensmittel gelöst, welches nach dem Verfahren des ersten Aspekts hergestellt ist.

In diesem Zusammenhang sei beispielhaft die Herstellung eines fruchthaltigen Lebensmittels angeführt, welches auf Äpfeln basiert:
- Äpfel werden bei einer Temperatur von 100 °C bis 180 °C, alternativ bei einer Temperatur von 100 °C bis 280 °C für 30 min bis 180 min thermisch schonend gebacken, bis diese eine weiche, mürbe, bratapfelähnliche Konsistenz aufweisen;
- in einer anschließenden Abkühlphase werden die Äpfel bis 0 °C abgekühlt und daraufhin zu einem feinen Apfelpüree püriert bzw. passiert;
- 60 % bis 99 % Apfelpüree bzw. püriertes Ausgangsprodukt wird mit 1 % bis 10 % eines pflanzlichen Eiweiß bzw. Proteins und 0 % bis 30 % eines Zuckers oder eines Zuckerersatzstoffes zu einer homogenen Masse vermischt, wobei sich die Prozentangaben auf Gewichtsprozent beziehen;
- das homogene Apfelpüree-Gemisch bzw. die homogenisierte Masse wird in einer antihaftbeschichteten Form oder auf Pergamentpapier ausgelegt und gleichmäßig verteilt;
- in einem Trocknungsschritt wird das homogene Apfelpüree-Gemisch bzw. die homogenisierte Masse bei einer Temperatur von 50 °C bis 150 °C getrocknet, bis es den Fingerdrucktest besteht, welcher sich auf den Vergleich der Härte des homogenen Apfelpüree-Gemisches bzw. der homogenisierten Masse und der Härte des menschlichen Daumenballens bezieht;
- anschließend wird das getrocknete Apfelpüree-Gemisch bzw. die homogenisierte Masse in mehrere Teile bzw. mehrere Schichten aufgeteilt und mehrere Teile bzw. mehrere Schichten aufgeschichtet und mit dem homogenen Apfelpüree-Gemisch bzw. mit der homogenisierten Masse im nicht-getrockneten bzw. nicht-dehydrierten verklebt, wobei jeweils zwei getrocknete Apfelpüree-Gemisch-Schichten bzw. zwei Schichten dehydrierter homogenisierter Masse durch ein homogenes Apfelpüree-Gemisch bzw. eine Schicht nicht-dehydrierter homogenisierter Masse miteinander verklebt werden;
- die aufgeschichteten und verklebten Schichten werden bei einer Temperatur von 25 °C bis 150 °C getrocknet; und
- nach einer weiteren Abkühlphase werden die verklebten Schichten in eine beliebige Form geschnitten, in Puderzucker gewälzt oder bestäubt und verpackt.

An dieser Stelle sei darauf hingewiesen, dass die Verfahrensschritte vorzugsweise in der angegebenen Reihenfolge durchzuführen sind.

Gemäß einem dritten Aspekt wird die Aufgabe erfindungsgemäß durch die Verwendung eines fruchthaltigen Nahrungsmittels als Teigware, Backware oder Konditorware gelöst, wobei das fruchthaltige Lebensmittel nach dem Verfahren des ersten Aspekts hergestellt ist. Hierbei sei zusätzlich darauf verwiesen, dass das fruchthaltige Lebensmittel beispielsweise in Form von Chips, Zwieback, einem Gewürz, Paniermehl, als streichfähiges Lebensmittel, insbesondere Brotaufstrich, Müsli, Cornflakes, Frucht- bzw. Schokoriegel vorliegen bzw. derart zubereitet werden kann. Ferner kann das fruchthaltige Lebensmittel bei der Herstellung von Molkereiprodukten, beispielsweise Eiscremes, als Zuschlagstoff für Fertignahrung und/oder in der Herstellung von Naturheilmitteln verwendet werden.

Gewünschtenfalls kann das erfindungsgemäße fruchthaltige Lebensmittel zur Lagerung gekühlt bzw. tiefgekühlt werden. Insbesondere bei Tiefkühlung sind aufgrund des niedrigen Wassergehalts des fruchthaltigen Lebensmittels keine Gefrierschäden zu erwarten.

Im Folgenden wird das erfindungsgemäße Verfahren sowie das erfindungsgemäße fruchthaltige Lebensmittel in größerem Detail anhand der begleitenden Zeichnungen beschrieben werden. Es stellt dar:
- Figur 1: eine Querschnittsansicht einer ersten Schicht einer dehydrierten, homogenisierten Masse; und
- Figur 2: eine Querschnittsansicht eines Stapelpakets, welches zwei erste Schichten gemäß Figur 1 und eine zweite Schichte aus einer nicht-dehydrierten homogenisierten Masse umfasst.

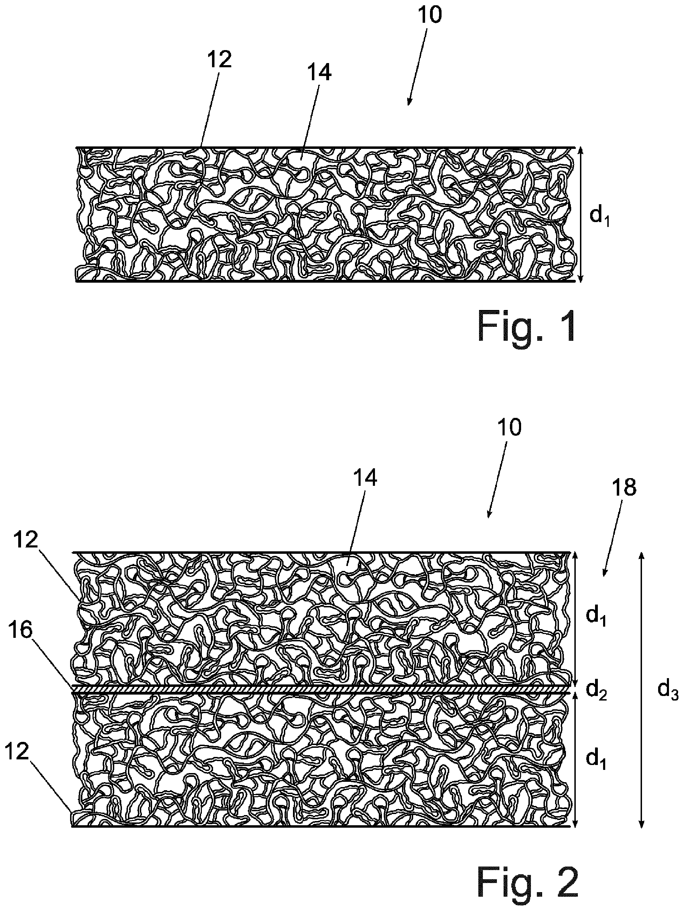

In Figur 1 ist ein erfindungsgemäßes fruchthaltiges Lebensmittel allgemein mit dem Bezugszeichen 10 versehen. Das fruchthaltige Lebensmittel 10 ist hier beispielhaft mit einer quaderförmigen ersten Schicht 12 mit einer Dicke d₁ ausgebildet, wobei die Dicke d₁ in dem dargestellten Ausführungsbeispiel beispielsweise 2 cm beträgt. Sowohl die Form des fruchthaltigen Lebensmittels 10 als auch die Dicke d₁ der ersten Schicht 12 können jedoch beliebig, insbesondere nach Konsumentenwunsch angepasst werden, beispielsweise um ein fruchthaltiges Lebensmittel in Form von fruchthaltigen Chips, Pommes und/oder Fruchtriegeln zu erzeugen. Die erste Schicht 12 umfasst ferner eine aufgeschlagene, dehydrierte sowie homogenisierte Masse und Lufteinschlüsse 14.

Zur Herstellung der homogenisierten Masse können beispielsweise Äpfel verwendet werden, welche in einem ersten Schritt bei einer Temperatur von 100 °C bis 180 °C erhitzt bzw. gegart werden, bis sie einen Wasserverlust von mindestens 15 % aufweisen. Folglich erhalten die Äpfel eine weichere Konsistenz, wodurch wiederum das im Anschluss an eine Abkühlphase durchgeführte Pürieren der Äpfel vereinfacht wird. Im Zuge des Pürierens, welches beispielsweise einen Passiervorgang umfasst, also ein Pressen der Äpfel durch ein feinmaschiges Sieb, können schwer verdauliche sowie unerwünschte Bestandteile der Äpfel, insbesondere deren Stiel, Kerne und/oder Schale entfernt werden, sodass lediglich das passierte bzw. pürierte aromatische Fruchtfleisch bewahrt wird. Dieses Fruchtfleisch, welches im Wesentlichen Apfelmus bzw. Apfelkompott entspricht, weist nun eine breiartige Konsistenz auf und stellt ein püriertes Ausgangsprodukt dar. An dieser Stelle sei angemerkt, dass für die Herstellung des erfindungsgemäßen Lebensmittels auch kommerziell erwerbliches Obst- und/oder Gemüsepüree eingesetzt werden kann.

Das pürierte Ausgangsprodukt wird nun in einem weiteren Schritt in einem spezifischen Massenverhältnis mit einem pflanzlichen Protein sowie optional einer zugegebenen essbaren Pflanzenfaser und einem Zucker oder einem Zuckerersatzstoff gemischt. Konkret werden hierbei 60 % bis 99 % des pürierten Ausgangsproduktes mit 1 % bis 10 % des pflanzlichen Proteins, 0 % bis 30 % der zugegebenen essbaren Pflanzenfaser und 0 % bis 30 % des Zuckers bzw. des Zuckerersatzstoffes verwendet, wobei die spezifische Zusammensetzung innerhalb der vorgegebenen Bereiche variiert werden kann, beispielsweise um den Geschmack, die Süße sowie den Ballaststoffgehalt der herzustellenden homogenisierten Massen je nach Konsumentenwunsch einzustellen.

Im Zuge des anschließenden Homogenisierens der bereitgestellten Masse, welches beispielsweise mittels eines Handrührgeräts mit Rührbesen oder anderweitiger Homogenisierungsverfahren durchgeführt werden kann, wird Energie und Luft in die homogenisierte Masse eingebracht, woraufhin von den pflanzlichen Proteinen stabilisierte Lufteinschlüsse 14 erzeugt werden und folglich das Volumen der homogenisierten Masse zunimmt. Dieser Vorgang, welcher analog zum Aufschlagen bzw. Steifschlagen von Eiweiß abläuft, kann so lange durchgeführt werden, bis das Volumen der homogenisierten Masse nicht weiter zunimmt, d.h. ein maximales Volumen vorliegt. Alternativ kann das Aufschlagen beim Erreichen eines gewünschten Volumens bzw. bei einer gewünschten Volumenzunahme beendet werden. Die Volumenzunahme der homogenisierten Masse korreliert dabei mit dem Mengenanteil des verwendeten pflanzlichen Proteins und der Dauer des Aufschlagens.

Um das in Figur 1 dargestellte fruchthaltige Lebensmittel 10 zu erhalten, wird die homogenisierte Masse dehydriert, wobei der Wassergehalt der homogenisierten Masse bei einer Temperatur zwischen 40 °C und 80 °C auf 0 % bis 30 % reduziert wird. Durch das Dehydrieren kann sowohl die Haltbarkeit des fruchthaltigen Lebensmittels 10 verbessert als auch dessen Aroma intensiviert werden. Ferner erzeugt das Dehydrieren ein fruchthaltiges Lebensmittel 10 mit einer luftigen sowie weichen Konsistenz, welches dennoch eine feste Struktur aufweist, sodass das fruchthaltige Lebensmittel 10 gut handhabbar und mit bloßen Händen konsumierbar ist.

Aus Figur 1 geht ferner hervor, dass die Lufteinschlüsse 14 gleichmäßig in der ersten Schicht 12 des fruchthaltigen Lebensmittels 10 verteilt sein können, sodass über die gesamte erste Schicht 12 eine homogene Konsistenz erzeugt wird. Beim Verzehr des erfindungsgemäßen fruchthaltigen Lebensmittels 10 vereinfachen insbesondere die Lufteinschlüsse 14 bzw. die durch die Lufteinschlüsse 14 begründeten Hohlräume innerhalb der ersten Schicht 12 das Abbeißen, Kauen und Verdauen des fruchthaltigen Lebensmittels 10, wodurch der Verzehr des fruchthaltigen Lebensmittels 10 für einen Konsumenten besonders angenehmem ist.

In Figur 2 ist nun ein fruchthaltiges Lebensmittel 10 dargestellt, welches zwei aufgeschichtete erste Schichten 12 mit Dicke d₁ umfasst, wobei zwischen den beiden ersten Schichten 12 eine zweite Schicht 16 mit Dicke d₂ ausgebildet ist. Die ersten Schichten 12 sowie die zweite Schicht 16 bilden dabei ein Stapelpaket 18, welches eine Dicke d₃ aufweist. Das Stapelpaket 18 entspricht hier dem fruchthaltigen Lebensmittel 10, welches ein Konsument beispielsweise zum Verzehr als kleine Zwischenmahlzeit mit sich führen und bei Bedarf verzehren kann.

Die Dicken d₁, d₂, d₃ sind hierbei variabel, wobei d₁ analog zu der in Figur 1 gezeigten ersten Schicht 12 2 cm betragen kann und d₂ beispielsweise bei 0,1 cm liegt. Somit ergibt sich für das Stapelpaket 18 eine Dicke d₃ von 4.1 cm, welche eine für einen Konsumenten angenehm handhabbare Dicke eines Lebensmittels darstellt. Es sei an dieser Stelle darauf hingewiesen, dass die Dicken d₁ einzelner erster Schichten 12 ebenfalls voneinander abweichen können.

Die zweite Schicht 16 besteht hier aus der unter Bezugnahme auf Figur 1 beschriebenen homogenisierten Masse, welche jedoch nicht dehydriert wurde. Folglich weist die zweite Schicht 16 einen im Vergleich zu den beiden ersten Schichten 12 wesentlich höheren Wassergehalt auf. Die zweite Schicht 16 fungiert im Stapelpaket 18 als Bindungsschicht bzw. Klebeschicht zwischen zwei ersten Schichten 12, wodurch eine Bindungskraft zwischen zwei jeweils benachbarten Schichten 12, 16 erzeugt wird. Durch eine weitere Dehydratation bei einer Temperatur zwischen 40 °C und 80 °C, im Zuge derer der Wassergehalt des Stapelpakets 18 auf 0 % bis 30 % reduziert wird, kann somit ein stabiles sowie haltbares fruchthaltiges Lebensmittel 10 erzeugt werden. Dabei ist das in Figur 2 dargestellte Stapelpaket 18 in Bezug auf dessen Form lediglich als exemplarisches Ausführungsbeispiel eines erfindungsgemäßen fruchthaltigen Lebensmittels 10 anzusehen. Vielmehr kann die Form des Stapelpakets 18 beliebig angepasst werden, insbesondere über die Anzahl und Dicke d₁, d₂ der Schichten 12, 16 in einem Stapelpaket 18.

Ferner kann das in den Figuren 1 und 2 veranschaulichte fruchthaltige Lebensmittel 10 beliebig, insbesondere je nach Konsumentenwunsch weiterverarbeitet werden. Beispielsweise kann das fruchthaltige Lebensmittel 10 mit Zucker, Puderzucker, Schokolade, Nüssen und/oder Früchten beschichtet bzw. bedeckt werden, um eine appetiterzeugende Optik zu kreieren und den Geschmack des fruchthaltigen Lebensmittels 10 zu beeinflussen. Des Weiteren kann das fruchthaltige Lebensmittel 10 in beliebig dicke Scheiben bzw. Portionen aufgeteilt werden, um dessen Verzehr zu erleichtern. Optional kann das fruchthaltige Lebensmittel 10 bzw. das in Scheiben geschnittene fruchthaltige Lebensmittel 10 nochmals dehydriert oder gefriergetrocknet werden, um die Haltbarkeit des fruchthaltigen Lebensmittels 10 weiter zu erhöhen.

Beispielhaft sei an dieser Stelle ferner darauf verwiesen, dass:
- im Falle der Verwendung von Äpfeln, der Apfelanteil ganz oder teilweise mit anderem Obst, Gemüse, Früchten und/oder Beeren ausgetauscht werden kann;
- dehydrierte oder gefriergetrocknete pflanzliche Bestandteile jeglicher Zustandsart verwendet werde können;
- als pflanzliche Bestandteile Früchte, vorzugsweise Obst, Beeren und/oder Waldfrüchte verwendet werden können;
- als Zusatzstoffe für die Herstellung des fruchthaltigen Lebensmittels Vitamine, Kakao, Gewürze, Kräuter, Nüsse, Hülsenfrüchte, Samen, pflanzliche Fette oder Öle, Mikroorganismen und/oder synthetische Aromen in allen verschiedenen Formen hinzugegeben werden können;
- die erzeugten Teile bzw. Schichten aus homogenisierter Masse gemischt aufeinander verklebt werden können;
- zusätzlich geschmacksstarke und nährstoffanreichernde Zusätze und/oder Säuerungsmittel zur Herstellung des fruchthaltigen Lebensmittels beigefügt werden können;
- der Geschmack des fruchthaltigen Lebensmittels einen von den pflanzlichen Bestandteilen bestimmten Geschmack aufweist;
- das fruchthaltige Lebensmittel zur Verwendung als bzw. als Teil in einer Backware, Teigware, Konditorware, in Form von Chips, Zwieback, einem Gewürz, Paniermehl, Aufstrichmasse, insbesondere als Brotaufstrich, sowie als Zuschlagstoff für Halb- und Fertiggerichte geeignet sein kann; und
- das fruchthaltige Lebensmittel als Ausgangsstoff für die Herstellung von Naturheilmitteln und als Zusatzstoff für die Herstellung von Back- und Konditorwaren, sowie Müsli und Cornflakes, Molkereiprodukten und Eiscremes verwendet werden kann.

## Patentansprüche

1. Verfahren zur Herstellung eines fruchthaltigen Lebensmittels (10), wobei das Verfahren die folgenden Schritte umfasst:
- Homogenisieren von 60 % bis 99 % eines pürierten Ausgangsproduktes mit 1 % bis 10 % wenigstens eines pflanzlichen Proteins, mit 0 % bis 30 % einer zugegebenen essbaren Pflanzenfaser und mit 0 % bis 30 % wenigstens eines Zuckers oder wenigstens eines Zuckerersatzstoffes, um eine homogenisierte Masse zu erhalten, wobei die homogenisierte Masse aufgeschlagen wird, um eine Volumenzunahme der homogenisierten Masse zu erreichen; und
- Dehydrieren der homogenisierten Masse, bei einer Temperatur von 40 °C bis 80 °C, bis die homogenisierte Masse einen Wassergehalt von 0 % bis 30 % aufweist.

2. Verfahren nach Anspruch 1, wobei das Verfahren ferner die folgenden Schritte umfasst:
- Bilden wenigstens einer ersten Schicht (12) aus der dehydrierten, homogenisierten Masse, wobei die erste Schicht (12) vorzugsweise eine Dicke von 0,4 cm bis 10 cm, besonders bevorzugt eine Dicke von 0,5 cm bis 5 cm aufweist;
- Aufbringen einer zweiten Schicht (16) auf eine Oberfläche der ersten Schicht (12), wobei die zweite Schicht (16) die nicht-dehydrierte, homogenisierte Masse umfasst und vorzugsweise eine Dicke von 0,05 cm bis 0,2 cm aufweist; und
- Aufschichten von einer oder mehreren ersten Schichten (12), um wenigstens ein Stapelpaket (18) zu erhalten, wobei in dem Stapelpaket (18) jeweils eine zweite Schicht (16) zwischen zwei ersten Schichten (12) angeordnet ist.

3. Verfahren nach Anspruch 2, wobei das Stapelpaket (18) bei einer Temperatur von 40 °C bis 80 °C dehydriert wird, bis das Stapelpaket (18) einen Wassergehalt von 0 % bis 30 % aufweist.

4. Verfahren nach Anspruch 3, wobei das Stapelpaket (18) ferner quer zu dessen Haupterstreckungsrichtung in Scheiben geschnitten wird, welche vorzugsweise eine Stärke von 0,1 cm bis 10 cm, besonders bevorzugt eine Stärke von 0,5 cm bis 5 cm aufweisen.

5. Verfahren nach Anspruch 3 oder 4, wobei das Stapelpaket (18) oder wenigstens eine Scheibe gefriergetrocknet wird oder bei einer Temperatur von 50 °C bis 80 °C bis zu einem absoluten Wassergehalt von 0 % bis 30 % dehydriert wird.

6. Verfahren nach einem der vorhergehenden Ansprüche, wobei das pürierte Ausgangsprodukt durch folgende Schritte erhalten wird:
- Erhitzen von Früchten, bei einer Temperatur von 100 °C bis 180 °C, bis die Früchte einen Wasserverlust von mindestens 15 % aufweisen;
- Abkühlen der Früchte, vorzugsweise auf eine Temperatur zwischen 100 °C und 0 °C; und
- Pürieren der Früchte, um das pürierte Ausgangsprodukt zu erhalten.

7. Verfahren nach einem der vorhergehenden Ansprüche und gegebenenfalls nach Anspruch 6, wobei wenigstens ein fruchthaltiger Saft zu dem pürierten Ausgangsprodukt oder zu den Früchten hinzugegeben wird.

8. Verfahren nach einem der vorhergehenden Ansprüche und gegebenenfalls nach Anspruch 6, wobei wenigstens ein Zusatzstoff zu dem pürierten Ausgangsprodukt oder zu den Früchten hinzugegeben wird, und wobei der Zusatzstoff wenigstens ein Vitamin, einen Mineralstoff, einen Aromastoff oder eine Kombination davon umfasst.

9. Verfahren nach einem der vorhergehenden Ansprüche, wobei zur Herstellung des pürierten Ausgangsproduktes Früchte verwendet werden, und wobei die Früchte Obst, Gemüse oder eine Kombination davon umfassen.

10. Verfahren nach Anspruch 9, wobei die zur Herstellung des pürierten Ausgangsproduktes verwendeten Früchte dehydrierte oder gefriergetrocknete und gegebenenfalls rehydrierte Früchte sind.

11. Verfahren nach Anspruch 9 oder 10, wobei Äpfel zur Herstellung des pürierten Ausgangsproduktes verwendet werden.

12. Verfahren nach einem der vorhergehenden Ansprüche, wobei das fruchthaltige Lebensmittel (10) mit Zucker, Puderzucker, Schokolade, Nüssen, Früchten oder einer Kombination davon beschichtet wird.

13. Fruchthaltiges Nahrungsmittel, hergestellt gemäß einem Verfahren nach einem der Ansprüche 1 bis 12.

14. Verwendung eines fruchthaltigen Nahrungsmittels nach Anspruch 13 als Teigware, Backware oder Konditorware, bevorzugt als Chips, Zwieback, Gewürz, Paniermehl, als streichfähiges Lebensmittel, insbesondere Brotaufstrich, Müsli, Cornflakes, Frucht- bzw. Schokoriegel.

15. Verwendung eines fruchthaltigen Nahrungsmittels nach Anspruch 13 als Ausgangsstoff für die Herstellung von Naturheilmitteln und als Zusatzstoff für die Herstellung von Back- und Konditorwaren, insbesondere von Müsli und Cornflakes, Molkereiprodukten und Eiscremes, oder als Zuschlagstoff für Fertignahrung.
